# EUROPÄISCHE PATENTSCHRIFT

(11) **EP 0 916 537 B1**
(45) Veröffentlichungstag und Bekanntmachung des Hinweises auf die Patenterteilung: **27.11.2002**
(21) Anmeldenummer: 98118708.1
(22) Anmeldetag: 02.10.1998
(51) Int. Cl.: B60J 10/04, B60J 10/08, B60J 5/00

(54) **Kraftfahrzeugkarosserieteil**
Motor vehicle body part
Partie de carrosserie de véhicule automobile

(30) Priorität: 14.11.1997 DE 19750448
(43) Veröffentlichungstag der Anmeldung: 19.05.1999
(73) Patentinhaber: DaimlerChrysler AG, 70567 Stuttgart (DE)
(72) Erfinder: Disson, Arno, 71069 Sindelfingen (DE); Much, Wolfgang, 71034 Böblingen (DE)

(56) Entgegenhaltungen:
- DE-A- 3 611 487
- DE-A- 3 642 435
- DE-A- 4 447 322
- US-A- 4 621 453

## Beschreibung

Die Erfindung betrifft ein Kraftfahrzeugkarosserieteil mit einer Scheibenverglasung, die in einem Karosserieteilrahmen geführt ist, der sich aus einem Rahmenprofil sowie aus einer Innenbeplankung und einer Außenbeplankung zusammensetzt, die mit dem Rahmenprofil verbunden sind, wobei das Rahmenprofil durchgehend Z-förmig gestaltet ist.

Ein solches Kraftfahrzeugkarosserieteil ist in Form einer Fahrzeugseitentür aus der DE 44 47 322 A1 bekannt. Eine Scheibenführung für eine Scheibenverglasung wird bei dieser Fahrzeugseitentür dadurch erreicht, dass ein Führungskanal für den Scheibenrand der Scheibenverglasung durch einen Z-Profilabschnitt der Innenbeplankung einerseits und durch ein Z-förmiges Rahmenprofil andererseits gebildet wird, wobei das Z-förmige Rahmenprofil mit einem außenliegenden, die Außenseite des Scheibenrandes flankierenden Z-Schenkel flächig mit der Außenbeplankung verbunden ist.

Eine ähnliche Scheibenführung für ein Fenster eines Schienenfahrzeugs ist aus der DE 36 11 487 A1 bekannt. Dort ist die Scheibenverglasung jedoch fest mit dem Rahmenprofil der Fensteröffnung verbunden. Es ist daher ausreichend, die Scheibenverglasung in ihrem Randbereich lediglich auf einer Seite durch einen Rahmenprofilabschnitt zu flankieren. Auf der anderen Seite ist lediglich ein elastisches Dichtprofil vorgesehen.

Ein weiteres Kraftfahrzeugkarosserieteil ist aus der EP 0 582 499 B1 bekannt. Das Kraftfahrzeugkarosserieteil stellt bei diesem Stand der Technik ein bewegliches Karosserieteil in Form einer vorderen Seitentür dar. Die Seitentür weist einen Türrahmen auf, der sich aus einer Außenbeplankung, einem C-förmigen Rahmenprofil und einer Innenbeplankung zusammensetzt. Dabei ist das C-förmige Rahmenprofil zur Führung der Seitenscheibenverglasung einerseits an der Außenbeplankung und andererseits an der Innenbeplankung festgelegt.

Aufgabe der Erfindung ist es, ein Kraftfahrzeugkarosserieteil der eingangs genannten Art zu schaffen, das mit einfachen Mitteln eine stabile und strömungsgünstige Gestaltung im Bereich der Scheibenverglasung ermöglicht.

Diese Aufgabe wird dadurch gelöst, dass ein innenliegender und die Scheibenverglasung flankierender Z-Schenkel an einem parallelen Verbindungsflansch der Innenbeplankung festgelegt und ein außenliegender, von der Scheibenverglasung weggerichteter Z-Schenkel flächig an einer parallelen Innenfläche der Außenbeplankung fixiert ist, wobei ein Randbereich der Außenbeplankung und das Rahmenprofil einen einen Scheibenrand der Scheibenverglasung umgreifenden Führungskanal bilden. Aufgrund der durchgehenden Gestaltung des Z-förmigen Rahmenprofiles ist dieses umlaufend geschlossen, wodurch eine hohe Maßhaltigkeit des gebildeten Führungskanales für die Scheibenverglasung erzielt wird. Durchschallungen und Undichtheiten im Bereich des Kraftfahrzeugkarosserieteilrahmens werden dadurch vermieden. Die flächige Fixierung des außenliegenden Z-Schenkels an der Innenfläche der Außenbeplankung in einem vom Randbereich der Außenbeplankung im Bereich der Scheibenverglasung weggerichteten Abschnitt ermöglicht eine einfachere und strömungsgünstigere Gestaltung des Randbereiches der Außenbeplankung, als dies beim Stand der Technik der Fall ist. Denn beim Stand der Technik ist im Randbereich der Außenbeplankung ein Falz gebildet, der den äußeren C-Schenkel des Rahmenprofiles umgreift, wodurch sich an dieser Stelle eine dreifache Materialstärke ergibt. Durch die erfindungsgemäße Lösung ist es somit möglich, die Scheibenverglasung so weit wie möglich zur Außenkontur der Kraftfahrzeugkarosserie hin zu verlagern, wodurch sich eine strömungsgünstige Gestaltung der Fahrzeugkarosserie ergibt. Die strömungsgünstige Gestaltung wird somit durch den lediglich geringen Stufenübergang zwischen der Scheibenverglasung und der Außenbeplankung auf Höhe des Randbereiches der Außenbeplankung erzielt. Die Anlage des äußeren Z-Schenkels an der Innenfläche der Außenbeplankung gewährleistet zudem eine zusätzliche Versteifung der Außenbeplankung in diesem Bereich. Ein weiterer wesentlicher Vorteil der erfindungsgemäßen Lösung ist es, dass die Verbindung des Z-förmigen Rahmenprofiles mit der Innenbeplankung und der Außenbeplankung durch äußerst einfache Herstellungstechniken, im Bereich der Innenbeplankung insbesondere durch einfache Schweißvorrichtungen, erfolgen kann.

In Ausgestaltung der Erfindung ist die flächige Fixierung des Z-Schenkels an der Außenbeplankung als Verklebung gestaltet. Dies ist eine besonders einfache und ästhetisch ansprechende Lösung, da die Außenseite der Außenbeplankung nicht durch Schweißstellen beeinträchtigt ist.

In weiterer Ausgestaltung der Erfindung ist ein die Scheibenverglasung überdeckender Randbereich der Außenbeplankung mit einem nach innen gewandten, umlaufenden Falz versehen. Dadurch wird in diesem Bereich eine Versteifung der Außenbeplankung erzielt.

In weiterer Ausgestaltung der Erfindung ist der Falz mit mehreren, in gleichmäßigen Abständen über seinen Umfang verteilt angeordneten und nach innen abragenden Stützlaschen versehen, die flächig an einem Mittelsteg des Z-förmigen Rahmenprofils anliegen und mit diesem verbunden sind. Diese Stützlaschen dienen zur Sicherung des Z-förmigen Rahmenprofiles für den Fall, dass der äußere Z-Schenkel mit der Außenbeplankung verklebt wird. Die Stützlaschen schaffen eine sichere Positionierung dieses Z-Schenkels an der Innenfläche der Außenbeplankung solange, bis eine vollständige Aushärtung des Klebstoffes erfolgt ist, so dass Beschädigungen der Verklebung zuverlässig verhindert werden.

In weiterer Ausgestaltung der Erfindung weist der Mittelsteg des Z-förmigen Rahmenprofiles auf Höhe der Stützlaschen parallelverlaufende Verprägungen auf, deren Breite größer als die Breite der Stützlaschen gestaltet ist. Diese Verprägungen schaffen eine sichere und flächige Anlage der Stützlaschen. Dadurch, dass die Verprägungen breiter gestaltet sind als die Stützlaschen, können auch Toleranzen zwischen dem Rahmenprofil und der Außenbeplankung ausgeglichen werden. Die Verprägungen sind derart auf die Dicke der Stützlaschen abgestimmt, dass die Tiefe der Verprägungen der Dicke der Stützlaschen entspricht. Dadurch ragen die Stützlaschen nicht über die Kontur des Z-Profiles hinaus, wodurch sich eine im wesentlichen gleichbleibende Tiefe des Führungskanales für die Scheibenverglasung ergibt.

In weiterer Ausgestaltung der Erfindung sind die Stützlaschen mit den Verprägungen durch Punktschweißung verbunden. Dies ist eine besonders einfache und kostengünstige Verbindungsart.

In weiterer Ausgestaltung der Erfindung ist der Falz im Bereich der Außenbeplankung als Materialdopplung der Außenbeplankung gestaltet. Diese Umfalzung des Randbereiches in sich ermöglicht somit eine gegenüber dem Stand der Technik verringerte Stufe zwischen der Außenseite der Scheibenverglasung und der Außenseite der Außenbeplankung, wodurch sich eine strömungsgünstigere Gestaltung des Kraftfahrzeugkarosserieteiles ergibt.

Nachfolgend wird ein bevorzugtes Ausführungsbeispiel der Erfindung beschrieben und anhand der Zeichnungen dargestellt.
- Fig. 1: zeigt schematisch eine Seitenansicht eines Teils eines Personenkraftwagens im Bereich einer erfindungsgemäßen Ausführungsform einer als Kraftfahrzeugkarosserieteil dienenden Seitentür,
- Fig. 2: perspektivisch vom Fahrzeuginnenraum her gesehen einen Ausschnitt der Seitentür nach Fig. 1 im Bereich des strichpunktierten Kreises II,
- Fig. 3: einen Schnitt durch einen oberen Türrahmenabschnitt der Seitentür nach Fig. 1 entlang der Schnittlinie III-III in Fig. 1,
- Fig. 4: eine weitere Schnittdarstellung des oberen Türrahmenabschnittes entlang der Schnittlinie IV-IV in Fig. 1 und
- Fig. 5: einen Schnitt durch den Türrahmenabschnitt nach Fig. 4 entlang der Schnittlinie V-V in Fig. 4.

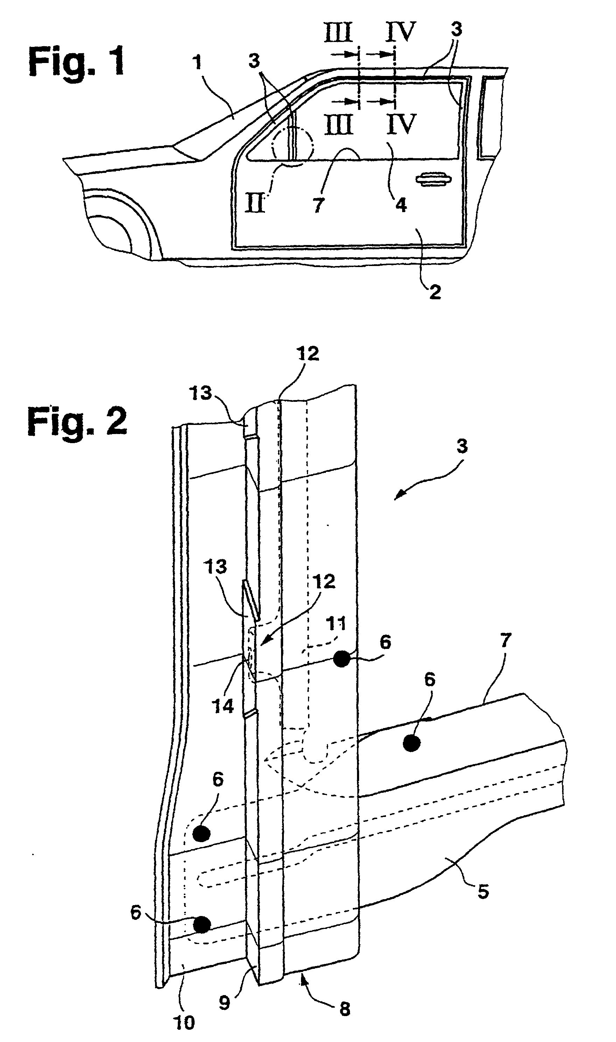

Ein Personenkraftwagen weist gemäß Fig. 1 eine als bewegliches Kraftfahrzeugkarosserieteil dienende Seitentür 2 auf, wobei auf der gegenüberliegenden Fahrzeugseite und damit - in Fahrtrichtung gesehen - rechts neben einer Windschutzscheibe 1 eine weitere, identisch gestaltete Seitentür 2 angeordnet ist.

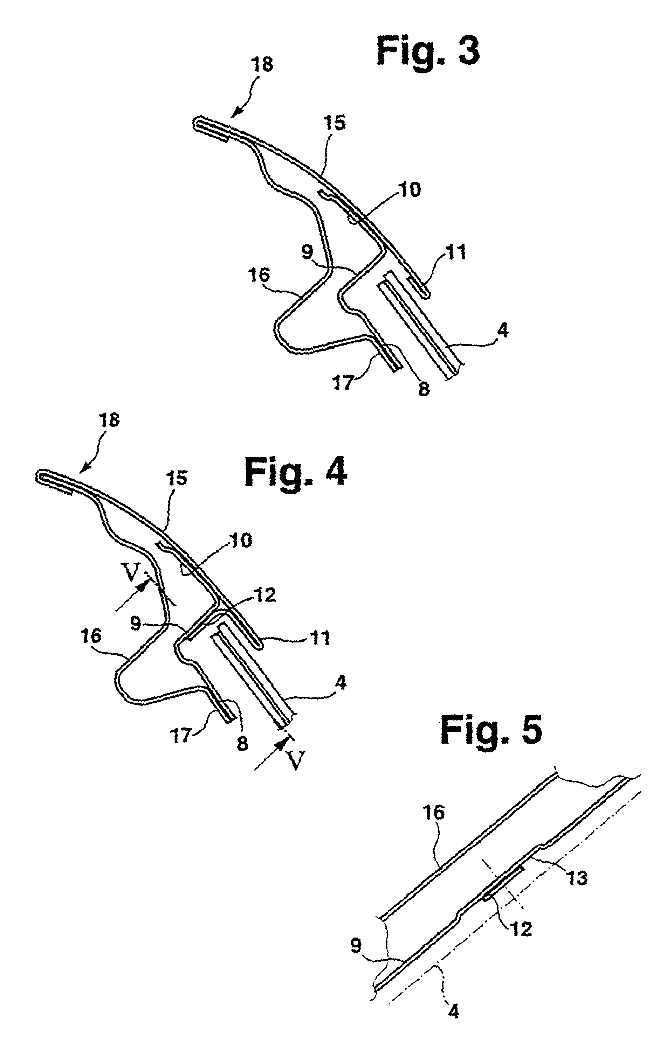

Die Seitentür 2 weist einen Türrahmen 3 auf, der eine Sichtöffnung begrenzt, die durch eine Scheibenverglasung 4 verschlossen ist. Eine Unterkante der durch die Scheibenverglasung 4 verschlossenen und seitlich wie oben durch den Türrahmen 3 begrenzten Sichtöffnung wird durch eine Fahrzeugbordkante 7 begrenzt. Die Scheibenverglasung 4 ist innerhalb der Seitentür 2 zwischen einer die Sichtöffnung freigebenden, nach unten versenkten Position und einer die Sichtöffnung verschließenden oberen Endposition beweglich gelagert. Zur Scheibenführung ist in dem Türrahmen 3 ein den Scheibenrand der Scheibenverglasung 4 umgreifender Führungskanal (Fig. 3 und 4) vorgesehen, der sich aus einem Z-förmig gestalteten Rahmenprofil 9 und einem Randbereich einer Außenbeplankung 15 in nachfolend näher beschriebener Weise zusammensetzt. Als Türrahmen 3 wird auch ein ein vorderes Fensterdreieck der Seitentür 2 begrenzender, vertikaler Stützsteg bezeichnet, der in diesem Bereich die Führung der Scheibenverglasung 4 bildet (siehe Ausschnitt II in Fig. 1 und 2). Im Bereich der Fahrzeugbordkante 7 ist eine in Fahrzeuglängsrichtung verlaufende Bordkantenverstärkung 5 vorgesehen, die über Schweißpunkte 6 auf Fig. 2 einerseits in nicht näher dargestellter Weise mit der Außenbeplankung 15 und andererseits mit dem Rahmenprofil 8, 9, 10 verbunden ist.

Das Rahmenprofil 8, 9, 10 ist Z-förmig und über die gesamte Erstreckung des Türrahmens 3 durchgehend gestaltet, wobei es auf beiden Seiten der Sichtöffnung für die Scheibenverglasung 4 analog der Darstellung nach Fig. 2 mit der Bordkantenverstärkung verbunden ist. Die Bordkantenverstärkung 5 und das Rahmenprofil 8, 9, 10 dienen zur Führung der Scheibenverglasung 4. Über die ganze Länge des Türrahmens 3 durchgehend ist das Z-förmige Rahmenprofil 8, 9, 10 einerseits mit einer Innenbeplankung 16 und andererseits mit einer Außenbeplankung 15 verbunden (Fig. 3 bis 5). Dabei weist das Z-förmige Rahmenprofil einen inneren Z-Schenkel 8 auf, der sich auf Höhe der Scheibenverglasung 4 derart parallel zu dieser erstreckt, daß er diese flankiert. Dieser innenliegende Z-Schenkel 8 ist mit einem umlaufenden Verbindungsflansch 17 der Innenbeplankung 16 durch Punktschweißung (oberer Schweißpunkt 6 in Fig. 2) verbunden. Die Innenbeplankung 16 ist mit ihrem gegenüberliegenden Endbereich im Bereich einer Türrahmenkante 18 mit der Außenbeplankung 15 verfalzt. Der innenliegende Z-Schenkel 8 geht mittels einer längssickenartigen Profilierung in einen Mittelsteg 9 über, der nahezu rechwinklig an den Z-Schenkel 8 ansetzt und einen Stirnrand der Scheibenverglasung 4 flankiert. Der Mittelsteg 9 ist etwa rechtwinklig zur Außenbeplankung 15 nach außen geführt und geht in einen außenliegenden Z-Schenkel 10 über, der flächig an einer korrespondierenden Innenfläche der Außenbeplankung 15 anliegt und mit dieser verklebt ist. Der freie Rand des Z-Schenkels 10 ist mit einer nicht näher bezeichneten Versteifungsrippe versehen. Das Rahmenprofil 8, 9, 10 stellt ein einstückig gestaltetes Blechprofil dar. Der außenliegende Z-Schenkel erstreckt sich von der Scheibenverglasung 4 weggerichtet zu dem Türrand 18 hin. Die Außenbeplankung 15 weist einen die Scheibenverglasung 4 überdeckenden Randbereich auf, der durch einen in sich nach innen umgefalzten Falz 11 versteift ist. In den Fig. 3 und 4 ist zwischen der Scheibenverglasung 4 und der Außenbeplankung 15 bzw. dem Mittelsteg 9 und dem innenliegenden Z-Schenkel 8 ein Freiraum dargestellt. Dieser wird in an sich bekannter Weise durch eine Scheibendichtung ausgefüllt, die hier aus Übersichtlichkeitsgründen nicht dargestellt ist.

Falls während der Produktion der Seitentür 2 eine vollkommene Aushärtung des Klebstoffes zwischen dem Z-Schenkel 10 und der Außenbeplankung 15 möglich ist, ist der Führungskanal in dem Türrahmen 3 umlaufend so gestaltet, wie es in Fig. 3 dargestellt ist. Falls jedoch noch während des Aushärtvorganges weitere Karosseriearbeitsschritte vorgenommen werden, könnte die Verklebung zwischen dem Z-Schenkel 10 und der Außenbeplankung 15 durch geringfügige Bewegungen oder Vibrationen des Rahmenprofiles 8, 9 beschädigt werden. Um dies zu vermeiden, sind beim dargestellten Ausführungsbeispiel gemäß Fig. 4 im Bereich des Falzes 11 der Außenbeplankung 15 mehrere, in gleichmäßigen Abständen über den Umfang des Türrahmens 3 verteilt angeordnete und parallel zum Mittelsteg 9 nach innen abragende Stützlaschen 12 vorgesehen, die mit dem Mittelsteg 9 durch Schweißpunkte 14 verbunden sind. Um eine fluchtende Anlage der Stützlaschen 12 im Bereich des Mittelsteges 9 zu ermöglichen, ist der Mittelsteg 9 in Höhe der Stützlaschen 12 mit Verprägungen 13 versehen, die gemäß den Fig. 2 und 5 gestaltet sind und eine Tiefe aufweisen, die der Dicke der Stützlaschen 12 entspricht. Die Breite der Verprägungen 13 ist etwa doppelt so groß wie die Breite der zugeordneten Stützlaschen 12, so daß Toleranzen zwischen der Außenbeplankung 15, 11, 12 und dem Rahmenprofil 8, 9, 10, 13 ausgeglichen werden, ohne die fluchtende Anbindung der Stützlaschen 12 im Bereich der Verprägungen 13 zu beeinträchtigen. Diese mit dem Mittelsteg 9 des Rahmenprofiles 8, 9, 10 verschweißten Stützlaschen 12 ermöglichen eine sichere Positionierung des Z-Schenkels 10 an der Innenfläche der Außenbeplankung 15, auch wenn für die Seitentür 2 weitere Arbeitsschritte durchgeführt werden.

## Patentansprüche

1. Kraftfahrzeugkarosserieteil mit einer Scheibenverglasung, die in einem Karosserieteilrahmen (3) geführt ist, der sich aus einem Rahmenprofil (8, 9, 10) sowie einer Innenbeplankung (16) und einer Außenbeplankung (15) zusammensetzt, die mit dem Rahmenprofil verbunden sind, wobei das Rahmenprofil (8, 9, 10) durchgehend Z-förmig gestaltet ist,
**dadurch gekennzeichnet, dass**
ein innenliegender und die Scheibenverglasung (4) flankierender Z-Schenkel (8) an einem parallelen Verbindungsflansch (17) der Innenbeplankung (16) festgelegt und ein außenliegender, von der Scheibenverglasung (4) weggerichteter Z-Schenkel (10) flächig an einer parallelen Innenfläche der Außenbeplankung (15) fixiert ist, wobei ein Randbereich der Außenbeplankung (15) und das Rahmenprofil (8, 9, 10) einen einen Scheibenrand der Scheibenverglasung (4) umgreifenden Führungskanal bilden.

2. Kraftfahrzeugkarosserieteil nach Anspruch 1,
**dadurch gekennzeichnet, daß**
die flächige Fixierung des Z-Schenkels (10) an der Außenbeplankung (15) als verklebung gestaltet ist.

3. Kraftfahrzeugkarosserieteil nach Anspruch 1 oder 2,
**dadurch gekennzeichnet, daß**
ein die Scheibenverglasung (4) überdeckender Randbereich der Außenbeplankung (15) mit einem nach innen gewandten, umlaufenden Falz (11) versehen ist.

4. Kraftfahrzeugkarosserieteil nach Anspruch 3,
**dadurch gekennzeichnet, daß**
der Falz (11) mit mehreren, im gleichmäßigen Abständen über seinen Umfang verteilt angeordneten und nach innen abragenden Stützlaschen (12) versehen ist, die flächig an einem Mittelsteg (9) des Z-förmigen Rahmenprofiles (8, 9, 10) anliegen und mit diesem verbunden sind.

5. Kraftfahrzeugkarosserieteil nach Anspruch 4,
**dadurch gekennzeichnet, daß**
der Mittelsteg (9) des Z-förmigen Rahmenprofiles (8, 9, 10) auf Höhe der Stützlaschen (12) parallel verlaufende Verprägungen (13) aufweist, deren Breite größer als die Breite der Stützlaschen (12) gestaltet ist.

6. Kraftfabrzeugkarosserieteil nach Anspruch 5,
**dadurch gekennzeichnet, daß**
die Stützlaschen (12) mit den Verprägungen (13) durch Punktschweißung (14) verbunden sind.

7. Kraftfahrzeugkarosserieteil nach Anspruch 3,
**dadurch gekennzeichnet, daß**
der Falz (11) im Randbereich der Außenbeplankung (15) als Materialdopplung der Außenbeplankung (15) gestaltet ist.

## Claims

1. Motor vehicle body component with a glass pane that is guided in a body component frame (3) assembled from a frame section (8, 9, 10) and an interior panel (16) and an exterior panel (15) connected to the frame section, the said frame section (8, 9, 10) being designed in a through-going Z shape,
**characterised in that**
an internal Z-arm (8) flanking the glass pane (4) is attached to a parallel joint flange (17) of the interior panel (16) and an external Z-arm (10) directed away from the glass pane (4) is fixed flat against a parallel inside surface of the exterior panel (15), such that an edge area of the exterior panel (15) and the frame section (8, 9, 10) form a guide channel which encloses an edge of the glass pane (4).

2. Motor vehicle body component according to Claim 1,
**characterised in that**
the flat attachment of the Z-arm (10) to the exterior panel (15) is designed as an adhesively bonded joint.

3. Motor vehicle body component according to Claims 1 or 2,
**characterised in that**
an edge area of the exterior panel (15) that covers the glass pane (4) is provided with an inwards-directed, surrounding fold (11).

4. Motor vehicle body component according to Claim 3,
**characterised in that**
the fold (11) is provided with several support strips (12) distributed at uniform intervals around its circumference and projecting inwards, which rest flat against a middle web (9) of the Z-shaped frame section (8, 9, 10) and are joined thereto.

5. Motor vehicle body component according to Claim 4,
**characterised in that**
the middle web (9) of the Z-shaped frame section (8, 9, 10) has impressions (13) extending parallel to one another at the positions of the support strips (12), the width thereof being greater than the width of the support strips (12).

6. Motor vehicle body component according to Claim 5,
**characterised in that**
the support strips (12) are joined to the impressions (13) by spot welds (14).

7. Motor vehicle body component according to Claim 3,
**characterised in that**
the fold (11) in the edge area of the exterior panel (15) is designed as a doubling of the material of the exterior panel (15).

## Revendications

1. Partie de la carrosserie du véhicule comportant un vitrage qui est guidé dans un encadrement de bordure de la carrosserie (3) qui se compose d'un profilé d'encadrement (8, 9, 10) ainsi que d'un bordage intérieur (16) et d'un bordage extérieur (15) qui sont reliés au profilé d'encadrement, le profilé d'encadrement (8, 9, 10) ayant une forme continue en Z, **caractérisée par le fait qu'**une branche du Z (8) qui est située à l'intérieur et qui flanque le vitrage (4) est fixée sur un rebord de liaison, parallèle, (17) du bordage intérieur (16) et qu'une branche du Z (10) qui est située à l'extérieur et orientée en sens opposé au vitrage (4), est fixée à plat contre une surface intérieure, parallèle, du bordage extérieur (15), une zone de bordure du bordage extérieur (15) et le profilé d'encadrement (8, 9, 10) formant un canal de guidage enserrant un bord du vitrage (4).

2. Partie de la carrosserie du véhicule selon la revendication 1, **caractérisée par le fait que** la fixation à plat de la branche du Z (10) contre le bordage extérieur (15) est réalisée sous forme de collage.

3. Partie de la carrosserie du véhicule selon la revendication 1 ou 2, **caractérisée par le fait qu'**une zone de bordure, recouvrant le vitrage (4), du bordage extérieur (15) présente un pli périphérique (11) orienté vers l'intérieur.

4. Partie de la carrosserie du véhicule selon la revendication 3, **caractérisée par le fait que** le pli (11) présente plusieurs barrettes d'appui (12) qui sont disposées réparties à intervalles réguliers sur sa périphérie, saillent vers l'intérieur, s'appuient à plat contre une traverse médiane (9) du profilé d'encadrement (8, 9, 10) en forme de Z et lui sont reliées.

5. Partie de la carrosserie du véhicule selon la revendication 4, **caractérisée par le fait que** la traverse médiane (9) du profilé d'encadrement (8, 9, 10) en forme de Z présente, au niveau des barrettes d'appui (12), des estampages (13) qui sont orientés parallèlement et dont la largeur est supérieure à la largeur des barrettes d'appui (12).

6. Partie de la carrosserie du véhicule selon la revendication 5, **caractérisée par le fait que** les barrettes d'appui (12) sont reliées aux estampages (13) par une soudure par points (14).

7. Partie de la carrosserie du véhicule selon la revendication 3, **caractérisée par le fait que** dans la zone de bordure du bordage extérieur (15), le pli (11) est réalisé sous forme d'un doublage de matériau du bordage extérieur (15).
